# FASCICULE DE BREVET EUROPEEN

(11) **EP 2 558 322 B1**
(45) Date de publication et mention de la délivrance du brevet: **19.03.2014**
(21) Numéro de dépôt: 11719350.8
(22) Date de dépôt: 11.04.2011
(51) Int. Cl.: B60K 23/08, G06F 17/00

(54) **PROCEDE DE FONCTIONNEMENT D'UN SYSTEME DE TRANSMISSION D'UN VEHICULE AUTOMOBILE**
FUNKTIONSVERFAHREN EINES GETRIEBESYSTEMS EINES KRAFTFAHRZEUGS
FUNCTIONING METHOD OF A TRANSMISSION SYSTEM OF A MOTOR VEHICLE

(30) Priorité: 12.04.2010 FR 1052779
(43) Date de publication de la demande: 20.02.2013
(73) Titulaire: Renault S.A.S., 92100 Boulogne-Billancourt (FR)
(72) Inventeur: FEBRER, Pascal, F-75014 Paris (FR); ROMANI, Nicolas, F-75016 Paris (FR); SAINT LOUP, Philippe, F-78760 Jouars Pontchartrain (FR)
(86) Numéro de dépôt international: PCT/FR2011/050825
(87) Numéro de publication internationale: WO 2011/128568

(56) Documents cités:
- EP-A2- 1 188 596
- DE-A1- 19 923 970
- US-A- 5 373 912

## Description

La présente invention concerne un procédé de fonctionnement d'un système de transmission du type à quatre roues motrices d'un véhicule automobile. L'invention porte également sur un système de transmission fonctionnant de cette manière. Elle porte encore sur un véhicule comprenant un tel système de transmission. L'invention porte enfin sur un programme d'ordinateur.

L'invention s'applique à un véhicule équipé d'un système de transmission quatre roues motrices pilotées (4x4). L'objectif de ce type de véhicule est d'améliorer les prestations telles que le comportement et la motricité, notamment en décollage, c'est-à-dire lors de la mise en mouvement du véhicule et en franchissement.

On connaît (voir par exemple le document EP 1 188 596 A2) un système de transmission du type quatre roues motrices dans lequel un moyen de couplage mécanique à commande électromagnétique d'un essieu avant à un essieu arrière (coupleur) peut fonctionner selon trois états définissant trois modes de fonctionnement du système de transmission.
- un premier mode de transmission où une partie (variable) seulement de la capacité maximale de couple issue d'une source de couple (le moteur du véhicule automobile) et destinée au train arrière est effectivement transmise au train arrière ; ce premier mode dénommé mode « 4*4 Automatique » correspondant à un coupleur dit « piloté », c'est-à-dire qu'un système de commande du coupleur gère automatiquement son fonctionnement, en particulier la quantité de couple transmise ou transmissible,
- un deuxième mode de transmission où la totalité de la capacité maximale de couple issu de la source de couple et destinée au train arrière est effectivement transmise au train arrière ; ce deuxième mode dénommé mode « 4*4 Tout Terrain » correspondant à un coupleur dit « fermé », c'est-à-dire qu'il est verrouillé dans un état définissant une valeur fixe de couple maximal transmissible, le verrouillage étant de préférence électrique,
- un troisième mode de transmission où aucun couple (ou un couple négligeable) issu de la source de couple n'est transmis au train arrière ; ce troisième mode dénommé mode « 4*2 » correspondant à un coupleur dit « ouvert », c'est-à-dire que le coupleur est désactivé ou qu'il ne transmet qu'une quantité négligeable de couple.

Ainsi, le conducteur doit connaître l'état fonctionnel du mode 4x4 dans lequel le véhicule se trouve en fonction de son interaction avec le bouton de sélection des modes 4x4. Le véhicule doit pouvoir communiquer également au conducteur certaines informations comme par exemple l'échauffement élevé du coupleur 4x4 ou la défaillance du système 4x4. Le système doit pouvoir également pouvoir s'assurer de la compatibilité des conditions de vitesses et températures appliqués au coupleur. Ainsi, il existe un besoin d'un dispositif d'interface IHM et d'interprétation de la volonté conducteur appliquée à un véhicule équipé d'un système de transmission 4x4.

On connaît du document FR2885427 un dispositif de contrôle et/ou de commande d'équipements d'un véhicule automobile à boutons-poussoirs et dalle tactile.

On connaît du document WO 99/20483 un bouton de commande d'équipement sur un tableau de bord d'un véhicule motorisé.

Le but de l'invention est de fournir un procédé de fonctionnement d'un système de transmission permettant de remédier aux problèmes évoqués précédemment et améliorant les procédés de fonctionnement connus de l'art antérieur. En particulier, l'invention propose un procédé de fonctionnement permettant d'améliorer le confort de conduite et d'éviter toute gêne ou tout doute du conducteur quant à son véhicule afin que celui-ci puisse se concentrer sur la conduite.

Le procédé selon l'invention régit le fonctionnement d'un système de transmission d'un véhicule automobile, le système de transmission comprenant un moyen de couplage mécanique des premier et deuxième essieux du système de transmission, l'état du moyen de couplage définissant plusieurs modes de transmission. Le système de transmission comprend un bouton de type impulsionnel commandant la sélection du mode de transmission et, suite à un calage du véhicule, le mode de transmission actif après redémarrage du véhicule est celui qui était actif avant le calage.

Le procédé peut comprendre une étape d'enregistrement en mémoire du mode de transmission actif lors du calage et une étape de maintien de ce mode de transmission dans cette mémoire pendant une durée limitée, par exemple égale à 30 secondes.

L'invention porte aussi sur un support d'enregistrement de données lisible par un calculateur sur lequel est enregistré un programme informatique comprenant des moyens de codes de programme informatique de mise en oeuvre des étapes du procédé défini précédemment.

Selon l'invention, le système de transmission d'un véhicule automobile comprend un moyen de couplage mécanique des premier et deuxième essieux d'un système de transmission, le premier essieu étant entraîné par défaut et le deuxième essieu étant entraîné optionnellement selon l'état du moyen de couplage. Le système comprend des moyens matériels et/ou logiciels de mise en oeuvre du procédé défini précédemment.

Selon l'invention, le véhicule automobile comprend un système de transmission défini précédemment.

L'invention porte aussi sur un programme informatique comprenant un moyen de code de programme informatique adapté à la réalisation des étapes du procédé défini précédemment, lorsque le programme est exécuté sur un ordinateur.

Le dessin annexé représente, à titre d'exemple, un mode d'exécution d'un procédé de fonctionnement selon l'invention et un mode de réalisation d'un système de transmission selon l'invention.
La figure 1 est un mode de réalisation d'un véhicule automobile comprenant un système de transmission à quatre roues motrices selon l'invention.
La figure 2 est un schéma d'une architecture électronique régissant le fonctionnement d'un système de transmission selon l'invention et permettant de mettre en oeuvre le procédé de fonctionnement selon l'invention.
La figure 3 est un schéma détaillé de différents blocs de traitements mis en oeuvre dans un calculateur.
La figure 4 est un schéma d'un bloc traduisant la logique d'établissement d'un signal définissant le mode de transmission active.
La figure 5 est un schéma d'un bloc traduisant la logique de basculement automatique d'un premier mode de transmission à un deuxième mode de transmission dans des conditions particulières.
La figure 6 est un schéma d'un bloc traduisant la logique d'autorisation du retour du deuxième mode de transmission au premier mode de transmission.
La figure 7 est un schéma d'un bloc traduisant la logique d'établissement d'un signal d'informations relatives aux systèmes de transmission et destinées au conducteur du véhicule.

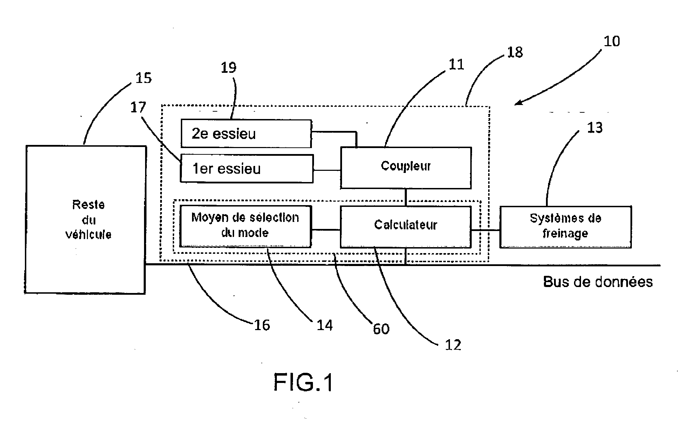

Un mode de réalisation de véhicule automobile 10 selon l'invention représenté à la figure 1 comprend un mode de réalisation d'un système de transmission 18 du type à quatre roues motrices, et en particulier du type à quatre roues motrices pilotées et un système de freinage 13. Ce système de transmission et ce système de freinage sont reliés au reste 15 du véhicule via un bus 16, via un calculateur 12.

Le système de transmission 18 comprend principalement un premier essieu 17 de roues du véhicule automobile, par exemple un essieu avant, un deuxième essieu 19 de roues du véhicule automobile, par exemple un essieu arrière, un moyen 11 mécanique de couplage, par exemple à commande électromagnétique, des premier et deuxième essieux (coupleur) et un système de commande 60 de l'état du moyen mécanique de couplage. Le système de commande comprend un moyen 14, notamment un bouton, de commande de sélection du mode de fonctionnement du système de transmission et un calculateur 12.

Le système de transmission est connecté à une source de couple d'entraînement du véhicule automobile (un moteur d'entraînement du véhicule).

Bien que non représentés, le système de transmission comprend des moyens de détermination de variables d'état du véhicule, tels que par exemple des moyens d'obtenir la vitesse de rotation de chaque roue, des moyens d'obtenir la température du coupleur, des moyens d'obtenir des informations d'état de différents équipements du véhicule, notamment des moyens d'obtenir des informations des dysfonctionnements et d'activités de certains calculateurs et des moyens électroniques ou automatiques de calcul. Le système de transmission comporte un moyen de sélection par l'utilisateur (par exemple au tableau de bord) d'un mode de fonctionnement du système, notamment un premier mode « 4*4 Automatique », un deuxième mode « 4*4 Tout Terrain » ou un troisième mode « 4*2 », un moyen de détection, à partir des variables d'état du véhicule et/ou du système, de la volonté du conducteur et des conditions de roulage (accélération, freinage, glissement...) et un moyen de commande pour commuter le système dans un mode déterminé en fonction du mode sélectionné par le conducteur, de la volonté du conducteur et des conditions de roulage du véhicule. Le système de transmission, en particulier le système de commande du moyen mécanique de couplage comprend également tous les moyens matériels et/ou logiciels permettant de mettre en oeuvre les procédés objets de l'invention. Notamment, le système de commande, en particulier le calculateur, peuvent comprendre un programme informatique comprenant un moyen de code de programme informatique adapté à la réalisation des étapes des procédés objets de l'invention.

Dans le système de transmission, le premier essieu (par exemple l'essieu avant, respectivement l'essieu arrière) est entraîné par défaut par la source de couple. Par contre, le deuxième essieu (par exemple l'essieu arrière, respectivement l'essieu avant) n'est entraîné qu'optionnellement selon l'état du coupleur.

À ce propos, selon l'état du coupleur, le système de transmission présente les trois modes de fonctionnement suivants:
- un premier mode de transmission où une partie (variable) seulement de la capacité maximale de couple issu de la source de couple et destinée au deuxième essieu est effectivement transmise au deuxième essieu ; ce premier mode dénommé mode « 4*4 Automatique » correspondant à un coupleur dit « piloté », c'est-à-dire que le système de commande du coupleur gère automatiquement son fonctionnement, en particulier la quantité de couple transmise ou transmissible,
- un deuxième mode de transmission où la totalité de la capacité maximale de couple issu de la source de couple et destinée au deuxième essieu est effectivement transmise au deuxième essieu ; ce deuxième mode dénommé mode « 4*4 Tout Terrain » correspondant à un coupleur dit « fermé », c'est-à-dire qu'il est verrouillé dans un état définissant une valeur fixe de couple maximal transmissible,
- un troisième mode de transmission où aucun couple ou seulement un couple négligeable issu de la source de couple est transmis au deuxième essieu ; ce troisième mode dénommé mode « 4*2 » correspondant à un coupleur dit « ouvert », c'est-à-dire que le coupleur est désactivé ou qu'il ne transmet qu'une quantité négligeable de couple.

Sur le plan technologique, le coupleur peut être du type à friction, c'est-à-dire qu'il comporte des disques de friction destinés à venir en contact les uns avec les autres pour transmettre le couple et un moyen actionneur pour écarter ou amener ces disques en contact les uns avec les autres. Ce moyen actionneur est piloté par le calculateur 12. Le coupleur peut en particulier être un embrayage multi-disques piloté en courant.

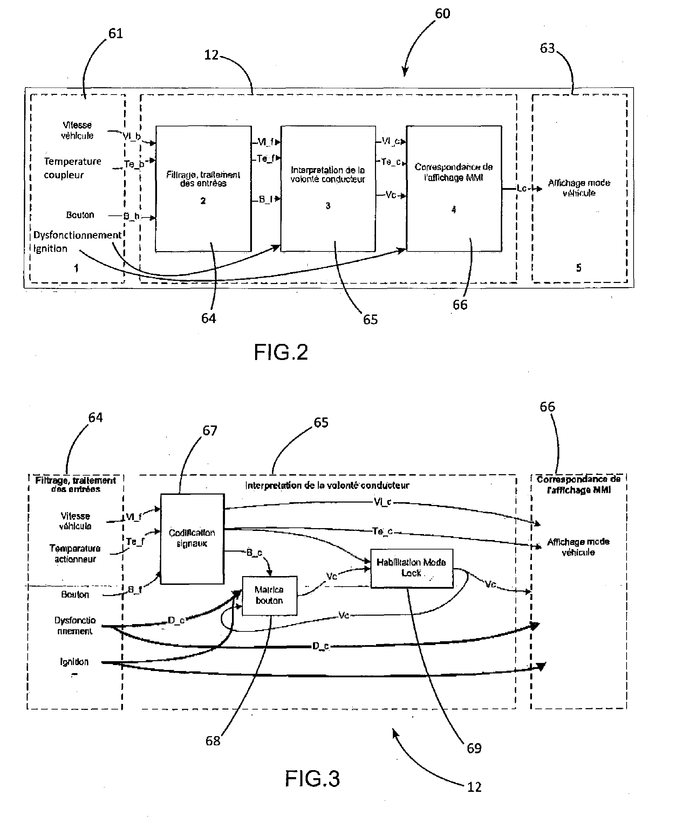

Comme représenté à la figure 2, le système de commande 60 comprend de préférence un premier module 61 collectant différentes informations internes et/ou externes au système de transmission, notamment la vitesse du véhicule, la température du coupleur, est l'état du moyen de commandes de sélection du mode de transmission, des informations de dysfonctionnement de certains équipements et des informations d'activité de certains calculateurs. Ces informations sont ensuite traitées dans le calculateur 12, puis des signaux d'informations, par exemple visuels et/ou son sonores, sont ensuite émis par un moyen d'information 63 à l'attention du conducteur.

Comme représenté à la figure 3, le calculateur 12 met en oeuvre plusieurs modules. Un premier module 64 filtre et traite les informations reçues par le calculateur. Un deuxième module 65 utilise ces informations pour interpréter la volonté du conducteur et pour déterminer le fonctionnement du système de transmission à mettre en oeuvre et un troisième module 66 détermine, en fonction des conclusions du deuxième module, les informations qui doivent être émises à l'attention du conducteur.

Dans le deuxième module 65, un premier bloc 67 codifie des informations à transmettre au conducteur, un deuxième bloc 68 gère l'interprétation qui doit être faite de l'état du moyen de commande de sélection du mode de transmission et un troisième bloc 60 gère une autorisation de fonctionnement du système de transmission dans un mode transmission particulier.

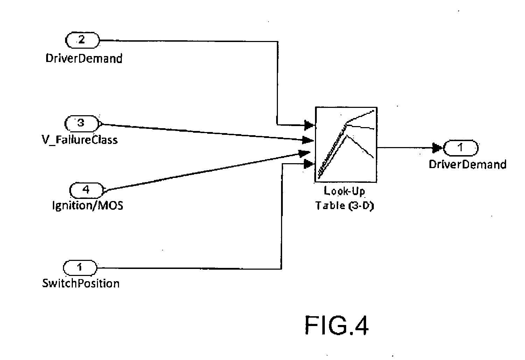

Un mode d'exécution d'un procédé de fonctionnement selon l'invention est décrit ci-après en référence aux figures 4 à 7.

Un signal V_Failure_Class représente les catégories de défauts possibles du système de transmission 4x4 ou du véhicule. Par exemple, ce signal peut prendre des valeurs comprises entre 0 et 3 où 0 identifie l'absence de défaut grave et 3 identifie les défauts les plus sévères. Un tableau ci-dessous indique des correspondances entre la valeur du signal et la sévérité des défauts.

| V_Failure_Class | Signification |
|---|---|
| 0 | Pas de défaut détecté |
| 1 | Défaut n'impactant pas la fonction 4x4 |
| 2 | Défaut impactant faiblement la fonction 4x4 |
| 3 | Défaut grave pour la fonction 4x4 |

Le Signal V_Failure_Class est généré par un ensemble de fonctions de détection dysfonctionnel du modèle fonctionnel 4x4. Il peut être construit soit à partir d'une mesure, d'un calcul ou simplement par un algorithme simple synthétisant l'état d'un ou plusieurs autres signaux d'état ou de valeurs. Suivant la nature du problème identifié, une classification d'impact de la fonction 4x4 lui est attribuée et donc une valeur lui est attribuée.

Un signal à deux composantes Ignition/MOS représente l'état de fonctionnement du véhicule et du calculateur 12. Plus précisément, il spécifie les différents états d'éveils du calculateur. Des tableaux ci-dessous indiquent différentes valeurs possibles pour ces composantes.

**Ignition**

| Ignition (V_Ignition) | Valeur | Signification |
|---|---|---|
| Ignition On | 0 | Contacteur hors tension |
| Ignition Off | 1 | Contacteur sous tension |

**MOS**

| MOS (V_MasterOperationState) | Valeur | Signification |
|---|---|---|
| MasterState_Standby | 0 | Etat non défini |
| MasterState_Init | 1 | Initialisation |
| MasterState_Run | 2 | Marche |
| MasterState_Shutdown | 3 | Extinction en cours |

Un signal de sortie V_flag_×_MMILed permet de coder des informations à restituer au conducteur via l'interface homme-machine, en particulier via un moyen d'affichage et/ou sonore de celle-ci, comme un élément du tableau de bord du véhicule ou un haut-parleur.

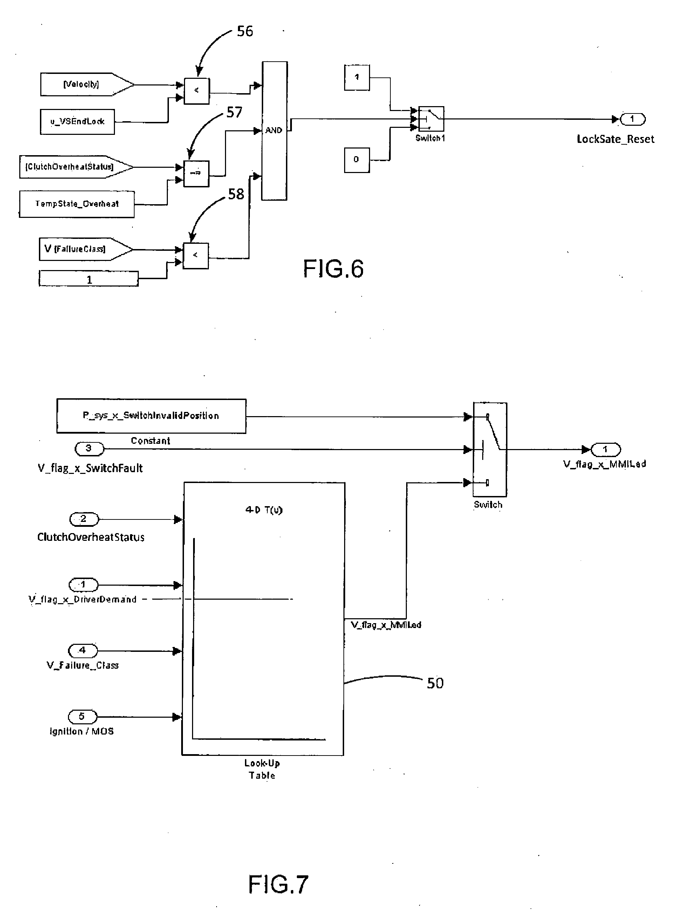

Ce signal est mis en forme avec les signaux d'entrée évoqués précédemment : V_Failure_Class contenant des informations de dysfonctionnements et Ignition/MOS contenant des informations d'état d'éveil du calculateur et/ou du véhicule et avec des signaux d'entrée supplémentaires. La mise en forme de ce signal est par exemple réalisée grâce à une table 50 représentée à la figure 7. Cette table traduit par exemple une matrice d'état à 4 entrées permettant toutes les combinaisons possibles.

L'imbrication du signal V_Failure_Class permet de régler la signalisation dans l'habitacle à partir d'un ou des plusieurs niveaux de défaillances avec ou sans progressivité de l'évolution de ces niveaux.

Le signal V_flag_×_MMILed permet donc de s'adapter aux situations et de remonter dans l'habitacle une signalisation visuelle ou sonore appropriée. Cela peut se représenter comme par exemple pour un signal indiquant un défaut grave par un avertissement sonore et ou l'affichage clignotant ou pas d'un voyant dans l'habitacle ou sur le tableau de bord d'une clé de service.

Le signal Ignition (allumage véhicule) représentant l'état d'éveil du système, indique par exemple que si le véhicule n'est pas prêt, le tableau de bord ne doit rien afficher pendant les phases d'initialisation ou d'arrêt.

L'utilisation des signaux Ignition et/ou MOS pour mettre en forme le signal V_flag_×_MMILed peut permettre de gérer la restitution des informations dans l'habitable comme par exemple l'affichage sur le tableau de bord de diodes électroluminescentes. Par exemple lorsque le contact est hors tension (Ignition OFF), le calculateur n'est pas forcément endormi tout comme le reste des systèmes électriques et/ou électroniques. On peut par exemple vouloir dans cette situation ne pas vouloir afficher sur le tableau de bord l'état de sélection du mode de transmission courant, mais plutôt éteindre les voyants ou simplement afficher un état spécifique selon certaines situations ou niveaux d'initialisations.

On remarque que le signal de sortie V_flag_×_MMILed est fonction du signal V_flag_×_DriverDemand traduisant la requête de mode de transmission formulée par le conducteur. Bien que l'information à restituer au conducteur et sa requête de mode de transmission soit complémentaire, il est volontaire d'appliquer une certaine redondance de sorte à verrouiller la restitution des informations de mode de transmission courant dans l'habitacle afin de lever toutes ambiguïtés et de respecter un cahier des charges en cas de modification de la construction du signal V_flag_×_DriverDemand. Cette redondance ou cette dépendance contribue à la robustesse de la fonction d'information du conducteur.

Dans un mode d'exécution du procédé de commande selon l'invention, il est possible de verrouiller le fonctionnement du système de transmission dans le mode de fonctionnement « 4*4 Tout Terrain » du dispositif de transmission. Cette possibilité peut être présente alors que le bouton de commande des modes de fonctionnement du système de transmission comporte un fonctionnement impulsionnel, c'est-à-dire que chaque impulsion sur le bouton de commande permet le passage d'un mode de fonctionnement à un autre.

Ainsi, lorsque le conducteur a sélectionné le mode « 4*4 Tout Terrain », en cas de coupure du contact et, en particulier, après un calage du moteur (fréquent en usage tout-terrain), le mode « 4*4 Tout Terrain » est mémorisé et conservé si le conducteur remet le contact puis redémarre dans les TLock-Latch secondes suivant la coupure contact précédente. La durée TLock-Latch est ajustée au cours de la mise au point et doit être supérieure à la durée nécessaire au redémarrage du moteur après calage et représente le seuil temporel d'un calage moteur ou d'une coupure temporaire du contacteur vraiment volontaire et qui ne porte ainsi aucune ambigüité de cette volonté. Par exemple, la durée TLock-Latch vaut 30 secondes. Si le contact reste coupé au-delà de cette durée, le système démarre en mode « 4*4 Automatique » considérant qu'il s'agit d'une phase de roulage différent. Le conducteur doit donc sélectionner de nouveau le mode « 4*4 Tout Terrain » avec le bouton de commande.

La fonction profite du fait que le calculateur met un certain temps avant de s'éteindre électriquement après coupure du contacteur pour des raisons de sécurité et/ou de préservation des organes mécaniques. On peut par exemple mettre à profit ce temps pour calculer leurs températures plutôt que de les mesurer et attendre un refroidissement de ces organes. Le calculateur ne s'éteint donc qu'après un temps minimal (déterminé lors des phases de mise au point) mais possiblement variablement supérieur pour les précédentes raisons. Pour l'exemple, on peut dire que ce temps minimal de rupture électrique est de 120 secondes. La fonction permet de conserver en mémoire le dernier mode de sélection choisi pendant un certain temps, TLock-Latch, s'il y a coupure du contacteur. Cela permet par exemple en cas d'un calage moteur, de couper et rallumer le contact sans perdre la mémoire du mode de transmission précédent, évitant la confusion et améliorant le confort de l'utilisateur.

Dans un mode d'exécution du procédé de commande selon l'invention, il n'est pas possible de conserver le mode de fonctionnement « 4*4 Tout Terrain » au-delà d'un premier seuil de vitesse. En effet, au-delà de ce premier seuil de vitesse, on passe immédiatement et éventuellement définitivement (sauf action spécifique du conducteur) en mode « 4*4 Automatique ». Complémentairement, le procédé de commande selon l'invention peut être tel que suite à un dépassement d'un deuxième seuil de vitesse (inférieur au premier seuil de vitesse), ce dépassement durant un temps, notamment un temps ininterrompu, de préférence compris entre 30 secondes et deux minutes, par exemple 50 secondes, le procédé de commande impose un passage en mode de fonctionnement « 4*4 Automatique » comme précédemment.

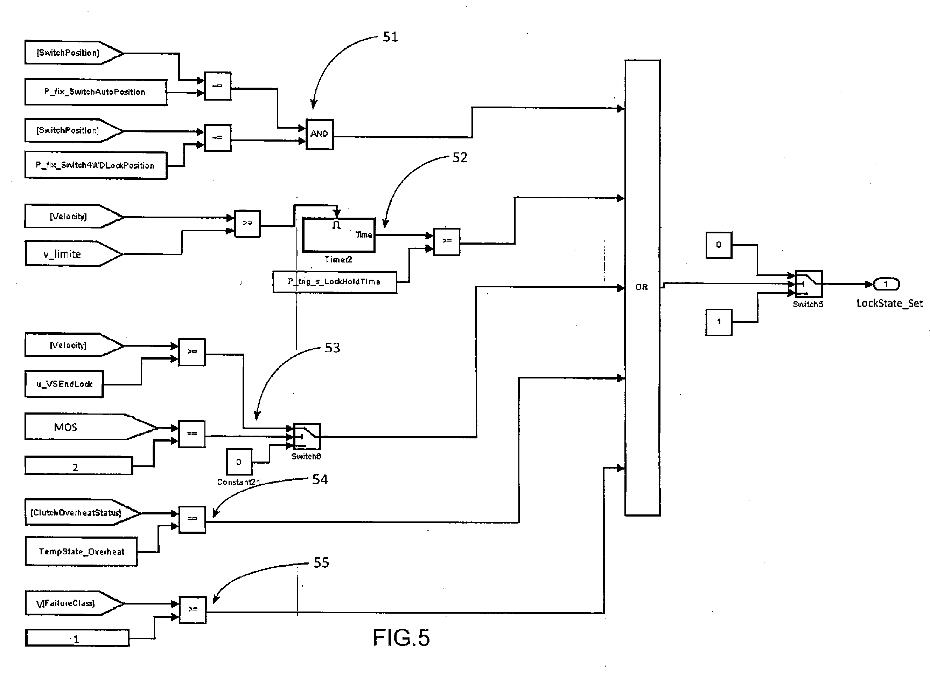

Un mode de réalisation d'une logique permettant la procédure de basculement du mode « 4*4 Tout Terrain » au mode « 4*4 Automatique » comme évoqué précédemment est décrit ci-après plus en détail en référence à la figure 5.
- Dans une branche logique 51, on contrôle l'état du bouton de commande du mode de fonctionnement du système de transmission afin de s'assurer que celui-ci n'est pas différent de la position « 4*4 Tout Terrain » ou « 4*4 Automatique ».
- Dans une branche logique 52, on teste, pendant une certaine durée, si la vitesse du véhicule (mesurée ou calculée) est supérieure à la deuxième vitesse limite. Cette durée P_tng_s_LockHoldTime peut par exemple être fixée à 50 secondes. Dans l'exemple de la figure 5, la deuxième vitesse seuil est fixée par exemple à 50 km/h. En effet, un tel seuil de vitesse peut être considéré comme moyennement élevé mais sur la durée non compatible avec le mode « 4*4 Tout Terrain », soit la conduite de franchissement tout-terrain.
- Dans une branche logique 53, on teste si la vitesse du véhicule (mesurée ou calculée) est supérieure à la première vitesse limite pouvant être issue d'un calcul à partir de variables. Cette première vitesse limite u_VSEndLock pouvant prendre la valeur de 90 km/h. Cette vitesse étant strictement incompatible avec le mode « 4*4 Tout Terrain », le basculement en mode « 4*4 Automatique » est alors immédiat. De plus, le signal MOS doit être strictement égal au mode 2 = Marche dans cette éventualité.
- Dans une branche logique 54, on teste tout dépassement du seuil de surchauffe du coupleur 4x4 : ClutchOverheatStatus = TempState_Overheat.
- Dans une branche logique 55, on teste toute défaillance : V_Failure_Class est de niveau supérieur ou égal à 1.

Un mode de réalisation d'une logique permettant la procédure de retour du mode « 4*4 Automatique » au mode « 4*4 Tout Terrain » comme évoqué précédemment est décrit ci-après plus en détail en référence à la figure 6. Pour ce retour, il faut au préalable une impulsion sur le bouton de commande de sélection du mode de fonctionnement « 4*4 Tout Terrain » et que toutes les conditions détaillées ci-dessous soient réunies.
- La vitesse véhicule est sous le seuil u_VSEndLock (branche logique 56),
- Le coupleur n'est pas en surchauffe : ClutchOverheatStatus différent de TempState_OverHeat (branche logique 57).
- Le système n'est défaillant : V_Failure_Class est de niveau inférieur à 1 (branche logique 58).

Comme pour le signal V_flag_x_MmILed, on remarque, notamment comme représenté à la figure 4, que le signal DriverDemand traduisant le mode de fonctionnement du système de transmission, est dépendant du signal V_Failure_Class représentant une catégorie de panne ou de problème du système de transmission 4x4. Par exemple, pour les cas les plus graves où les modes quatre motrices seraient incompatibles, le procédé de commande selon l'invention prend la main par rapport au bouton de commande de sélection du mode de fonctionnement du système de transmission. Ainsi, par exemple, en cas de problème, le mode de fonctionnement « 4*2 » peut être actif alors que conducteur requiert le mode de fonctionnement « 4*4 Automatique » ou « 4*4 Tout Terrain ». Pour un ou des modes dysfonctionnels où la sévérité des pannes seraient moins graves, le procédé de commande peut par exemple n'autoriser que les modes « 4*2 » et « 4*4 Automatique » et empêcher l'utilisation du mode « 4*4 Tout Terrain ».

Le procédé de commande selon l'invention s'intègre dans un système de transmission dont l'architecture matérielle :
- comprend au moins un bouton de commande de sélection des modes de fonctionnement du système de transmission,
- où la température du coupleur 4x4 est mesurée ou estimée,
- où la vitesse longitudinale du véhicule est mesurée ou estimée,
- où il existe un affichage de restitution du mode encours sonore ou visuel comme par exemple un affichage à diodes électroluminescentes sur une planche de bord.

## Revendications

1. Procédé de fonctionnement d'un système de transmission (18) d'un véhicule automobile (10), le système de transmission comprenant un moyen (11) de couplage mécanique des premier (17) et deuxième (19) essieux du système de transmission, l'état du moyen de couplage définissant plusieurs modes de transmission, **caractérisé en ce que** le système de transmission comprend un bouton de type impulsionnel commandant la sélection du mode de transmission et **en ce que**, suite à un calage du véhicule, le mode de transmission actif après redémarrage du véhicule est celui qui était actif avant le calage.

2. Procédé de fonctionnement selon la revendication précédente, **caractérisé en ce qu'**il comprend une étape d'enregistrement en mémoire du mode de transmission actif lors du calage et une étape de maintien de ce mode de transmission dans cette mémoire pendant une durée limitée, par exemple égale à 30 secondes.

3. Support d'enregistrement de données lisible par un calculateur sur lequel est enregistré un programme informatique comprenant des moyens de codes de programme informatique de mise en oeuvre des étapes du procédé selon l'une des revendications précédentes.

4. Système (12) de transmission d'un véhicule automobile (10), le système de transmission comprenant un moyen (11) de couplage mécanique des premier (17) et deuxième (19) essieux d'un système de transmission (18), le premier essieu étant entraîné par défaut et le deuxième essieu étant entraîné optionnellement selon l'état du moyen de couplage, **caractérisé en ce qu'**il comprend des moyens matériels et/ou logiciels de mise en oeuvre du procédé selon l'une des revendications 1 à 2.

5. Véhicule automobile (10) comprenant un système (18) de transmission selon la revendication précédente.

6. Programme informatique comprenant un moyen de code de programme informatique adapté à la réalisation des étapes du procédé selon l'une des revendications 1 à 2, lorsque le programme est exécuté sur un ordinateur.

## Patentansprüche

1. Funktionsverfahren eines Getriebesystems (18) eines Kraftfahrzeugs (10), wobei das Getriebesystem ein Mittel (11) zum mechanischen Kuppeln der ersten (17) und zweiten (19) Achse des Getriebesystems aufweist, wobei der Zustand des Kupplungsmittels mehrere Kraftübertragungsmodi definiert, **dadurch gekennzeichnet, dass** das Getriebesystem einen Knopf des Typs Druckknopf aufweist, der die Auswahl des Kraftübertragungsmodus steuert, und dass im Anschluss an ein Abwürgen des Fahrzeugs der nach dem Neustarten des Fahrzeugs aktive Kraftübertragungsmodus derjenige ist, der vor dem Abwürgen aktiv war.

2. Funktionsverfahren nach dem vorhergehenden Anspruch, **dadurch gekennzeichnet, dass** es einen Schritt des Aufzeichnens im Speicher des Kraftübertragungsmodus aufweist, der bei dem Abwürgen aktiv war, und einen Schritt des Aufrechterhaltens dieses Kraftübertragungsmodus in diesem Speicher während einer beschränkten Dauer, zum Beispiel gleich 30 Sekunden.

3. Datenaufzeichnungsträger, der von einem Rechner lesbar ist, auf dem ein Informatikprogramm aufgezeichnet ist, das Informatikprogramm-Codemittel zum Umsetzen der Schritte des Verfahrens nach einem der vorhergehenden Ansprüche aufweist.

4. Kraftübertragungssystem (12) eines Kraftfahrzeugs (10), wobei das Kraftübertragungssystem ein Mittel (11) zum mechanischen Kuppeln der ersten (17) und zweiten (19) Achse eines Kraftübertragungssystems (18) aufweist, wobei die erste Achse standardmäßig angetrieben wird, und die zweite Achse optional je nach dem Zustand des Kupplungsmittels angetrieben wird, **dadurch gekennzeichnet, dass** es materielle und/oder Softwaremittel zum Umsetzen des Verfahrens nach einem der Ansprüche 1 bis 2 aufweist.

5. Kraftfahrzeug (10), das ein Kraftübertragungssystem (18) nach dem vorhergehenden Anspruch aufweist.

6. Informatikprogramm, das ein Informatikprogramm-Codemittel aufweist, das zur Ausführung der Schritte des Verfahrens nach einem der Ansprüche 1 bis 2 geeignet ist, wenn das Programm auf einem Computer ausgeführt wird.

## Claims

1. Method for operating a transmission system (18) of a motor vehicle (10), the transmission system comprising a means (11) for mechanically coupling the first (17) and second (19) axles of the transmission system, the state of the coupling means defining a number of transmission modes, **characterized in that** the transmission system comprises a pulse-type button controlling the selection of the transmission mode and **in that**, after the vehicle has stalled, the transmission mode that is active following the restarting of the vehicle is the mode that was active before the vehicle stalled.

2. Operating method according to the preceding claim, **characterized in that** it comprises a step of storing in memory the transmission mode that is active at the time of the stall and a step of keeping this transmission mode in this memory for a limited duration, for example equal to 30 seconds.

3. Computer-readable data storage medium on which is stored a computer program comprising computer program code means for implementing the steps of the method according to either of the preceding claims.

4. Transmission system (12) of a motor vehicle (10), the transmission system comprising a means (11) for mechanically coupling the first (17) and second (19) axles of a transmission system (18), the first axle being driven by default and the second axle being driven optionally according to the state of the coupling means, **characterized in that** it comprises hardware and/or software means for implementing the method according to either of Claims 1 and 2.

5. Motor vehicle (10) comprising a transmission system (18) according to the preceding claim.

6. Computer program comprising a computer program code means suitable for implementing the steps of the method according to either of Claims 1 and 2, when the program is run on a computer.
